# EUROPÄISCHE PATENTSCHRIFT

(11) **EP 2 429 882 B1**
(45) Veröffentlichungstag und Bekanntmachung des Hinweises auf die Patenterteilung: **28.08.2013**
(21) Anmeldenummer: 10721672.3
(22) Anmeldetag: 06.05.2010
(51) Int. Cl.: B62D 55/215

(54) **VERBINDUNGSVORRICHTUNG**
CONNECTING DEVICE
DISPOSITIF DE LIAISON

(30) Priorität: 12.05.2009 DE 102009020906
(43) Veröffentlichungstag der Anmeldung: 21.03.2012
(73) Patentinhaber: Diehl Defence Land Systems GmbH, 66629 Freisen (DE)
(72) Erfinder: MÜLLER, Winfried, 42857 Remscheid (DE)
(74) Vertreter: Diehl Patentabteilung
(86) Internationale Anmeldenummer: PCT/EP2010/002773
(87) Internationale Veröffentlichungsnummer: WO 2010/130367

(56) Entgegenhaltungen:
- EP-A1- 0 319 367
- DE-A1- 3 437 484
- DE-A1- 4 407 268
- US-A- 1 956 472
- US-A1- 2002 079 737

## Beschreibung

Die Erfindung betrifft eine Vorrichtung zur Verbindung eines Endes einer Gummibandkette mit einem anderen Ende der Gummibandkette oder zur Verbindung eines Endes eines ersten Bandsegments einer Gummibandkette mit einem anderen Ende eines zweiten Bandsegments einer Gummibandkette.

Solche Verbindungsvorrichtungen sind beispielsweise aus der EP 0 319 367 A1 und aus der DE 44 07 268 A1 bekannt.

Fahrzeugketten werden seit jeher zur Mobilisierung von Fahrzeugen eingesetzt, bei welchen aufgrund großer Fahrzeugmasse und/oder unwegsamem Einsatzgebiet des Fahrzeugs der Einsatz von Rädern zur Fortbewegung problematisch wäre. Der Einsatz einer Fahrzeugkette bringt es mit sich, dass diese beim Umlauf im sogenannten Laufwerk in regelmäßigen Abständen einer Torsionskraft ausgesetzt ist. Solche typischen Belastungssituationen sind beispielsweise bei einem Panzer die Umlenkpunkte am Triebkranz und der Umlenkrolle. Bei einer Fahrzeugkette mit Kettengliedern aus Stahl kann die Torsionsfähigkeit der Kette nur durch Segmentierung (= Unterteilung in Kettenglieder) und Einbau von Bolzen und Bolzenlagern gewährleistet werden. Die Technologie einer reinen Stahlkette, wie sie noch während des Zweiten Weltkrieges eingesetzt wurde, stößt jedoch schnell an ihre Grenzen. So ist für eine höhere Fahrzeuggeschwindigkeit eine gewisse Elastizität der Fahrzeugkette erforderlich. Zudem ist die Lebensdauer einer reinen Stahlkette durch den ständigen Metall-Metall-Kontakt zwischen den Kettengliedern bzw. Bolzenlagern und den Bolzen stark begrenzt. Daher wurden in der Vergangenheit zunehmend gummigelagerte Bolzen bei der Fahrzeugkettenherstellung eingesetzt. Diese gummigelagerten Bolzen werden unter Vorspannung derart in Bohrungen in den Kettengliedern eingepresst, dass es beim Umlauf der Kette im Fahrwerk weder zu einer Reibung zwischen Stahlflächen noch zu einer Reibung zwischen Gummioberflächen und Stahlflächen kommt. Die Drehung der Bolzen in den Bohrungen der Kettenglieder (= Bolzenlager) wird vollständig durch die elastische Verformung der Gummischicht aufgenommen, welche zwischen der Bolzenoberfläche und der Kettengliedbohrung eingepresst ist.

In jüngerer Vergangenheit wurde durch die großen Fortschritte in der Materialforschung der Einsatz von Gummibandketten immer interessanter, nicht nur im militärischen Bereich, sondern auch bei zivilen Fahrzeugen wie z. B. Schneeräumfahrzeugen. Eine Gummibandkette braucht im Gegensatz zu einer Stahlkette prinzipiell überhaupt keine Bolzenlager. Durch die Dehnbarkeit des Gummibandes bzw. der in ihm befindlichen Zugträger (Stahlseile oder Faserverbunde) ist die Elastizität sowohl in Längsrichtung als auch die erforderliche Torsionsfähigkeit beim Umlenken der Gummibandkette gewährleistet. Jedoch ist das Handling (Aufziehen und Ablegen) einer solchen geschlossenen, unteilbaren Kette schwierig und aufwendig. Es wäre deshalb wünschenswert, die grundsätzlichen Vorteile einer Gummibandkette mit dem Vorzug einer leichten Montage oder Demontage der Kette am Fahrzeug zu verbinden.

Die Übertragung des Prinzips der gummigelagerten Bolzen von der reinen Stahlkette auf die Gummibandkette erweist sich jedoch als problematisch, da der Gummibandkettenkörper im Gegensatz zum Kettenglied einer Stahlkette selbst elastisch und somit verformbar ist.

### Vorteile der Erfindung

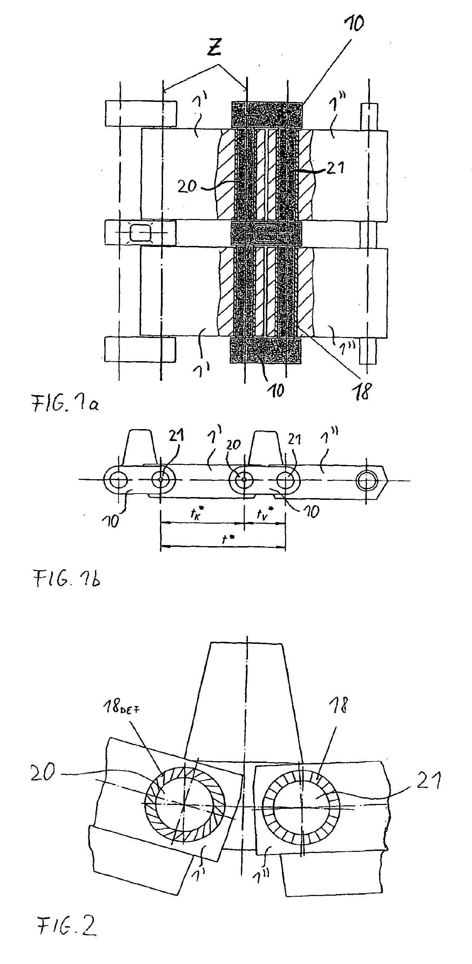

Die vorliegende Erfindung geht von der Idee aus, das Konzept der sogenannten Stahl-Verbinderkette auf eine Gummibandkette anzuwenden. Wie in der Figur 1a in Aufsicht und in Figur 1 b in Seitenansicht dargestellt, werden bei der Stahl-Verbinderkette benachbarte Kettenglieder 1', 1" durch sogenannte Verbinder 10 miteinander verbunden. Jedes Kettenglied 1', 1" einer Stahl-Verbinderkette enthält zwei Kettenbolzen 20, 21, die durch eine Gummi enthaltende Kettenbolzenlagerung 18 mit dem Kettengliedkörper 1', 1" verbunden sind. Jedes Kettenglied 1', 1" hat also - im Gegensatz zur sogenannten Scharnierkette - zwei Drehachsen Z. Die Verbinder 10 und die durch sie verbundenen Kettenbolzen 20, 21 zweier benachbarter Kettenglieder 1', 1" bilden wegen des Formschlusses und/oder Kraftschlusses zwischen den Verbindern 10 und den Kettenbolzen 20, 21 einen starren Verbund. Eine Kettenteilung t* kann sich aus dem Stichmaß des Kettengliedkörpers t*_{K} und dem Stichmaß des Verbinders t*_{V} zusammensetzen.

In der Detailansicht der Figur 2 wird die Situation verdeutlicht, wenn die Stahl-Verbinderkette aus der Lage, in der die Kettenbolzenlagerung 18 keiner Verdrehbeanspruchung unterliegt, ausgelenkt wird, um sich z. B. dem Teilkreis des Antriebsrades anzupassen. Dann dreht sich der Kettengliedkörper 1' um den Kettenbolzen 20, wodurch die Kettenbolzenlagerung 18_{DEF} verformt wird. Diese Verformung wird durch die schrägen Schraffurlinien der linken Kettenbolzenlagerung 18_{DEF} verdeutlicht. Die Drehung des Kettengliedkörpers 1', 1" um seinen jeweiligen Kettenbolzen 20, 21 wird vollständig von der Kettenbolzenlagerung 18 aufgenommen, so dass keine Verschiebung zwischen Bolzenoberfläche und Innenwandung der Kettenbolzenlagerung 18 und auch keine Verschiebung zwischen Außenwandung der Kettenbolzenlagerung 18 und Innenwandung der Kettengliedbohrung auftritt.

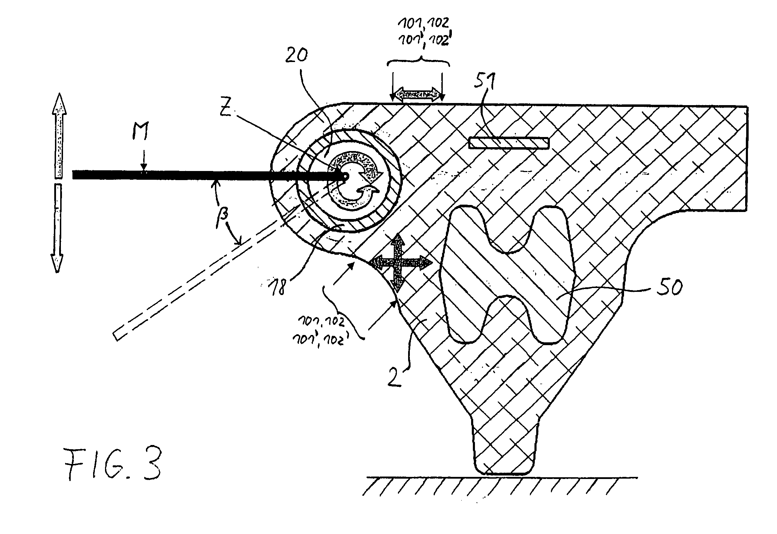

Will man nun das oben geschilderte Prinzip der Stahl-Verbinderkette auf eine Gummibandkette anwenden, ergibt sich das Problem, dass bei einer Gummibandkette nicht nur die Kettenbolzenlagerung 18 sondern auch der Gummibandkettenkörper selbst elastisch und somit verformbar wäre. Die daraus entstehende Problematik wird in Figur 3 veranschaulicht. Wirkt zwischen Kettengrundkörper 2 und Bolzen 20 ein Drehmoment M (in der Prinzipdarstellung der Figur 3 als Hebel angedeutet, der an der Drehachse Z des Bolzens 20 angreift und um den Winkel β gedreht wird), so führt dies dazu, dass über die Gummilagerung 18 Kräfte auf den Gummigrundkörper 2 übertragen werden, welche diesen Gummigrundkörper 2 insbesondere in dessen Endbereich 101, 102; 101', 102' stauchen und/oder dehnen. Insbesondere der Bereich zwischen Bolzen 20 und etwaige zur strukturellen Verstärkung in den Gummigrundkörper 2 eingelassenen Traversen 50, 51 steht unter besonderer Zugund/oder Dehnungsbelastung. An den derart belasteten Stellen 101, 102; 101', 102' kann es zu hohen Spannungen in der Laufflächengummierung kommen, welche zunächst zu Einrissen in der Laufflächengummierung führen können. Ist der Kettengrundkörper 2 an den betreffenden Stellen erst einmal eingerissen, können sich diese Risse sehr schnell immer weiter in den Grundkörper 2 fortsetzen, was letztlich zu einem Abriss des Bolzenlagerteils vom restlichen Teil des Grundkörpers 2 führen kann. So wird der durch die Gummilagerung 18 prinzipiell erreichbare Vorteil der Verschleißfreiheit zwischen Bolzen 20 und Bolzenlagerung durch den Nachteil der Ermüdungsrisse im Kettengrundkörper 2 im Bereich der Enden 101, 102; 101', 102' der Gummibandkette wieder zunichte gemacht.

In Anbetracht der zuvor geschilderten Problematik schlägt die vorliegende Erfindung eine Vorrichtung vor zur Verbindung eines Endes einer Gummibandkette mit einem anderen Ende der Gummibandkette oder zur Verbindung eines Endes eines ersten Bandsegments einer Gummibandkette mit einem anderen Ende eines zweiten Bandsegments einer Gummibandkette. Diese erfindungsgemäße Vorrichtung umfasst zumindest zwei Rohre mit einem in dem jeweiligen Rohr gummigelagerten Bolzen, von denen jeweils eines in das eine Ende und in das andere Ende der Gummibandkette oder der Bandsegmente eingelassen werden kann, und zumindest einen Verbinder, mittels welchem die Bolzen zueinander verdrehfest koppelbar sind. Dabei ist die durch die Gummilagerung hervorgerufene Verdrehsteifigkeit der Bolzen gegenüber ihrem jeweiligen Rohr in Abhängigkeit zur Biegesteifigkeit der Gummibandkette oder der Bandsegmente im Bereich der Enden eingestellt. Dadurch kann gewährleistet werden, dass ein auf den Bolzen wirkendes Drehmoment bevorzugt von der Gummilagerung des Bolzens aufgenommen wird. Dadurch können Zug- und/oder Dehnungsbelastungen im Bereich der Enden der Gummibandkette oder der Bandsegmente vermieden oder zumindest verringert werden.

Vorzugsweise übersteigt die Verdrehsteifigkeit der Bolzen gegenüber ihrem jeweiligen Rohr nicht die Biegesteifigkeit der Gummibandkette oder der Bandsegmente im Bereich der Enden. Es ist von Vorteil, wenn letzterer Umstand zumindest im verwendungsspezifischen Schwenkwinkelbereich der Enden der Gummibandkette oder der Enden der Bandsegmente zueinander gilt. Anders ausgedrückt ist es vorteilhaft, dass die Verdrehsteifigkeit der Bolzen gegenüber ihrem jeweiligen Rohr im Arbeitsbereich der Gummibandkette stets geringer als die Biegesteifigkeit des Gummibandkörpers im Bereich der Enden ist. Dadurch kann gewährleistet werden, dass bei -einer anfänglichen Verschwenkung der Enden der Gummibandkette zueinander zunächst nur die Gummilagerung der Bolzen einer Torsion unterworfen wird, so dass keine oder nur geringe Kräfte auf die Struktur im Bereich der Enden des Gummibandkörpers wirken.

Gemäß einer besonders bevorzugten Ausführungsform der vorliegenden Erfindung ist die Verdrehsteifigkeit der Bolzen zumindest um einen Faktor 1,5 bis 4 geringer als die Biegesteifigkeit der Gummibandkette oder der Bandsegmente im Bereich der Enden. Tendenziell gilt, dass die Biegebelastung auf die Enden des Gummibandkörpers umso geringer ist, je geringer die Verdrehsteifigkeit der Bolzen gegenüber der Biegesteifigkeit der Gummibandkette oder der Bandsegmente ist. Daher kann es unter Umständen besonders vorteilhaft sein, dass die Verdrehsteifigkeit der Bolzen gegenüber der Biegesteifigkeit der Gummibandkette oder der Bandsegmente im Bereich der Enden vernachlässigbar klein ist.

Der verwendungsspezifische Schwenkwinkelbereich der Enden der Gummibandkette oder der Bandsegmente zueinander beträgt normalerweise zwischen 0 und 30°. Zumindest in diesem Winkelbereich sollte also die Gummilagerung der Bolzen eine ausreichend niedrige Verdrehsteifigkeit der Bolzen gewährleisten. Vorzugsweise ist die erhöhte Verdrehweichheit der Gummilagerung sogar in einem Schwenkwinkelbereich zwischen 0 und 60° gegeben, um z. B. auch bei schneller Fahrt des Kettenfahrzeugs die Torsionsbelastung des Gummibandkörpers niedrig zu halten. Besonders bevorzugt ist die niedrige Verdrehsteifigkeit der Bolzen in einem Schwenkwinkelbereich von 0 bis 80° gegeben, um auch bei extremen Belastungsspitzen (z. B. beim Überfahren von Geländekanten oder Gegenständen mit kleinem Krümmungsradius) die Biegeund/oder Dehnungsbelastungen auf die Enden des Gummibandkörpers gering zu halten.

Vorzugsweise ist die durch die Gummilagerung hervorgerufene Verdrehsteifigkeit der Bolzen gegenüber ihrem jeweiligen Rohr in Abhängigkeit zur Masse des Fahrzeugs eingestellt, bei welchem die Gummibandkette aufgezogen werden soll. Die Ausmaße des Gummibandkörpers sind in der Regel umso größer, je höher die Fahrzeugmasse ist. Größer dimensionierte Gummibandkörper weisen eine erhöhte Biegesteifigkeit auf. Die Torsionssteifigkeit des Gummibandkörpers ist also abhängig von der Dimension der Kette, welche sich aus der Fahrzeugmasse ableitet. Je größer eine Gummibandkette also dimensioniert ist, desto verdrehsteifer kann auch der Bolzen in seiner Gummilagerung gelagert sein, um trotzdem noch eine ausreichend hohe Verdrehweichheit der Gummilagerung zu gewährleisten.

Vorzugsweise beträgt die durch die Gummilagerung hervorgerufene Verdrehsteifigkeit der Bolzen bei einer Verdrehung der Bolzen gegenüber ihrem jeweiligen Rohr um 15° bei einer Fahrzeugmasse von 4.000 kg (also 4 Tonnen = 4 t) ungefähr 5 Nm. Bei einer Fahrzeugmasse von 8.000 kg beträgt die Verdrehsteifigkeit vorzugsweise ungefähr 7 Nm. Bei einer Fahrzeugmasse von 12.000 kg beträgt die Verdrehsteifigkeit vorzugsweise ungefähr 12 Nm. Bei einer Fahrzeugmasse von 15.000 kg beträgt die Verdrehsteifigkeit vorzugsweise ungefähr 18 Nm. Bei einer Fahrzeugmasse von 18.000 kg beträgt die Verdrehsteifigkeit vorzugsweise ungefähr 23 Nm. Bei einer Fahrzeugmasse von 20.000 kg beträgt die Verdrehsteifigkeit vorzugsweise ungefähr 25 Nm. Die letztgenannten Werte für die durch die Gummilagerung hervorgerufene Verdrehsteifigkeit der Bolzen in Relation zur Fahrzeugmasse stellen einen idealen Kompromiss zwischen möglichst hoher Verdrehweichheit der Bolzen und jeweils ausreichender struktureller Festigkeit der Gummilagerung dar. Die Verdrehsteifigkeit/Verdrehweichheit der Bolzen gegenüber ihrem jeweiligen Rohr entspricht dem Drehmoment, das benötigt wird, um eine Verdrehung des Bolzens aus der undeformierten Lage der Gummilagerung heraus um einen bestimmten Winkel zu erreichen. Die Verdrehsteifigkeit der Bolzen entspricht also dem Drehmomentwiderstand, den die Gummilagerung einer Verdrehung des Bolzens um diesen Winkel entgegensetzt.

Vorzugsweise ist die durch die Gummilagerung hervorgerufene Verdrehsteifigkeit der Bolzen gegenüber ihrem jeweiligen Rohr über den Spannungswert der Gummimischung eingestellt. Dabei ist der Spannungswert vorzugsweise umso größer, je größer die Fahrzeugmasse ist. Je größer der Spannungswert der Gummimischung, desto größer ist die Verdrehsteifigkeit der aus dieser Gummimischung gefertigten Gummilagerung, desto "härter" ist also die Gummimischung, desto größer ist also der Drehmomentwiderstand, den die Gummilagerung einer Verdrehung des gummigelagerten Bolzens entgegensetzt. Unter dem Spannungswert σᵢ im Sinne der vorliegenden Erfindung wird der Spannungswert nach DIN 53504 verstanden, welcher als der Quotient aus der bei Erreichen einer bestimmten Dehnung vorhandenen Zugkraft Fᵢ an dem Gummikörper und dem anfänglichen Querschnitt A₀ des Gummikörpers definiert ist. Es gilt also σᵢ = Fᵢ / A₀. Dabei steht das Indexzeichen i im Symbol σᵢ für den Zahlenwert der zugehörigen Dehnung, z. B. σ₃₀₀ für 300 % Dehnung. Vorzugsweise beträgt der Spannungswert σ₃₀₀ der Gummimischung für die Gummilagerung der Bolzen bei Fahrzeugmassen zwischen 4.000 kg und 20.000 kg ungefähr zwischen 3,8 MPa und 12,4 MPa.

Die vorliegende Erfindung ist die durch die Gummilagerung hervorgerufene Verdrehsteifigkeit der Bolzen gegenüber ihrem jeweiligen Rohr über die Dicke der Gummilagerung zwischen Bolzen und Rohrinnenfläche eingestellt. Dabei ist es besonders vorteilhaft, wenn die Dicke der Gummilagerung durch ein ungefähr gleichbleibendes Verhältnis von Bolzendurchmesser zu Rohrinnendurchmesser gegeben ist. Tendenziell ist der Bolzendurchmesser bei Gummibandketten umso größer, je größer die Masse des Fahrzeugs ist, bei welchem die Gummibandkette aufgezogen werden soll.

Weiterhin ist die durch die Gummilagerung hervorgerufene Verdrehsteifigkeit der Bolzen gegenüber ihrem jeweiligem Rohr über die beim Einpressen der Bolzen in ihr jeweiliges Rohr aufzuwendende Kraft und die mit diesem Einpressen verbundene Kompression der Gummilagerung eingestellt. Vor dem Einpressen der gummiumhüllten Bolzen werden diese vorzugsweise in Öl, beispielsweise in Rüböl, getaucht und dann in ihre jeweiligen Rohre eingepresst. Das Öl dient zum einen als Gleitmittel, zum anderen wird durch das Öl die Gummioberfläche der Gummilagerung angelöst, was später nach dem Einpressvorgang zu einem festen Verbund zwischen Gummioberfläche der Gummilagerung und innerer Oberfläche des Rohres führt.

Vorzugsweise ist die aufgewandte Einpresskraft und die damit verbundene Kompression der Gummilagerung umso größer, je größer die Fahrzeugmasse ist. Als besonders vorteilhaft hat es sich erwiesen, dass die Einpresskraft bei Fahrzeugmassen zwischen 4.000 kg und 20.000 kg ungefähr zwischen 35 kN und 80 kN beträgt.

Die Erfindung umfasst ferner auch eine Gummibandkette mit zwei Enden, welche mittels einer der vorstehend beschriebenen erfindungsgemäßen Vorrichtungen miteinander zu einer geschlossenen Kette verbindbar sind. In beiden Enden der Gummibandkette ist jeweils ein Rohr mit einem in dem Rohr gummigelagerten Bolzen eingelassen. Die Bolzen sind über zumindest einen Verbinder zueinander verdrehfest koppelbar. Diese Verdrehfestigkeit kann z. B. durch Formschluss zwischen Verbinder und Bolzen hergestellt werden. Dazu können z. B. die Bolzenenden tangential angefräst sein und in entsprechende Passungen im Verbinder eingeführt sein. Insbesondere um ein Abrutschen des Verbinders von den Bolzenenden zu verhindern, kann der Rahmen des Verbinders über eine Schraube fest mit den Bolzenenden verspannt werden (Kraftschluss). Die durch die Gummilagerung hervorgerufene Verdrehsteifigkeit der Bolzen gegenüber ihrem jeweiligen Rohr ist bei der erfindungsgemäßen Gummibandkette in Abhängigkeit zur Biegesteifigkeit der Gummibandkette im Bereich der Enden eingestellt.

Die vorliegende Erfindung umfasst ferner auch eine Gummibandkette mit mehreren Bandsegmenten, deren Enden mittels einer oder mehrerer vorstehend beschriebenen erfindungsgemäßen Vorrichtungen miteinander zu einer geschlossenen Kette verbindbar sind. Dabei ist in jedem der Enden jeweils ein Rohr mit einem in dem Rohr gummigelagerten Bolzen eingelassen. Die Bolzen von zwei miteinander zu verbindenden Bandsegmenten sind über zumindest einen Verbinder zueinander verdrehfest koppelbar. Die durch die Gummilagerung hervorgerufene Verdrehsteifigkeit der Bolzen gegenüber ihrem jeweiligen Rohr ist in Abhängigkeit zur Biegesteifigkeit der Bandsegmente im Bereich der Enden eingestellt.

Vorzugsweise weisen die Bandsegmente jeweils einen Grundkörper aus Gummi auf, der einvulkanisierte, zugbelastbare Einlagen aufweist, welche die quer im Grundkörper eingelassenen Rohre umschlingen.

Weitere vorteilhafte Ausführungsformen und Verbesserungen der Erfindung ergeben sich aus nachstehender Beschreibung von bevorzugten Realisierungsbeispielen der Erfindung. Es wird darauf hingewiesen, dass die Erfindung auch weitere Ausführungsformen umfasst, die sich aus einer Kombination von Merkmalen ergeben, die getrennt in den Patentansprüchen und/oder in der Beschreibung und den Figuren aufgeführt sind.

Nachstehend wird die Erfindung anhand ihrer vorteilhaften Ausführungsformen unter Bezugnahme auf die Zeichnungen näher erläutert.

In den Zeichnungen bezeichnen die gleichen oder ähnlichen Bezugszeichen gleiche oder ähnliche Teile. In den Zeichnungen zeigen:
- Figuren 1a und 1b: eine schematische Darstellung einer stählernen Fahrzeugkette nach dem Verbinderprinzip,
- Figur 2: eine Illustration der Funktionsweise der gummigelagerten Bolzen in einer stählernen Fahrzeugkette nach dem Verbinderprinzip,
- Figur 3: eine Darstellung zur Erläuterung der Riss- und Abknickgefährdung im Endbereich einer Gummibandkette nach dem Verbinderprinzip,
- Figur 4a: eine Aufsicht einer bevorzugten Ausführungsform der erfindungsgemäßen Vorrichtung,
- Figur 4b: eine Schnittansicht der bevorzugten Ausführungsform der erfindungsgemäßen Vorrichtung der Figur 4a entlang der dort eingezeichneten Schnittlinie,
- Figur 4c: eine Schnittansicht der bevorzugten Ausführungsform der erfindungsgemäßen Vorrichtung gemäß Figur 4b entlang der dort eingezeichneten Schnittlinie,
- Figur 5: eine Anordnung mehrerer erfindungsgemäßer Vorrichtungen im Rahmen des Konzepts einer Bändergleiskette,
- Figur 6: eine Schnittansicht entlang der in Figur 5 eingezeichneten Schnittlinie,
- Figur 7: eine bevorzugte Ausführungsform eines Bandsegments einer erfindungsgemäßen Gummibandkette,
- Figur 8: eine schematische Darstellung einer erfindungsgemäßen Gummibandkette mit zwei Enden,
- Figur 9: eine schematische Darstellung einer erfindungsgemäßen Gummibandkette mit mehreren Bandsegmenten, und
- Figur 10: ein Diagramm zur Darstellung der Winkelabhängigkeit des Drehmoments, welches benötigt wird, um eine Verdrehung eines gummigelagerten Bolzens zu erreichen, und zwar zum einen für eine Fahrkette mit Stahlgliedern, zum anderen für eine Bandkette mit nicht-angepasstem Bolzenlager und schließlich für eine Gummibandkette mit erfindungsgemäßer Bolzenlagerung.

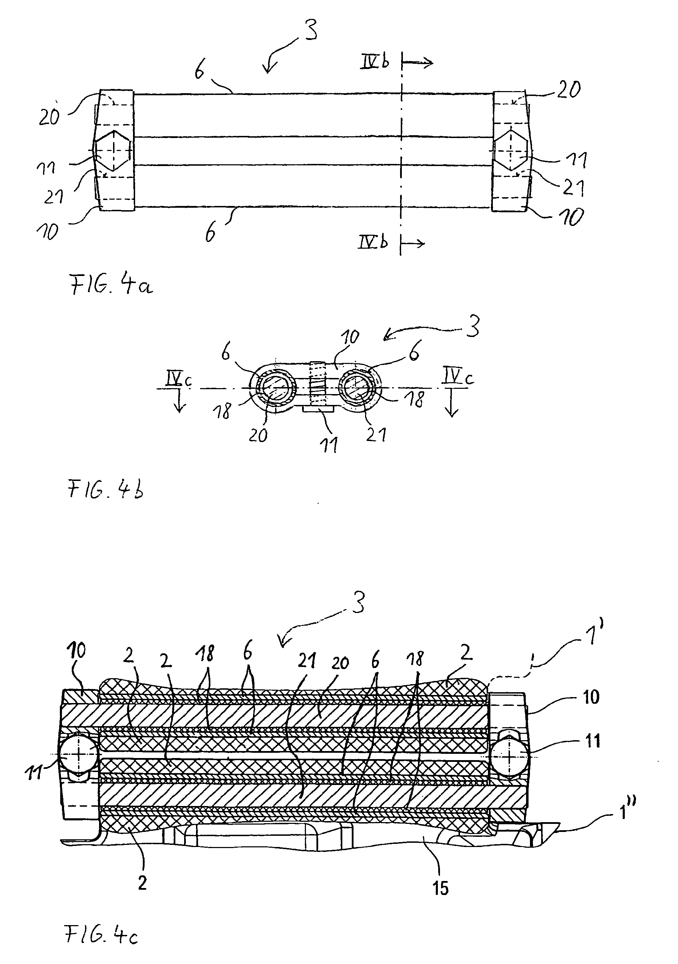

Die Figuren 4a, 4b und 4c zeigen verschiedene Ansichten einer bevorzugten Ausführungsform der erfindungsgemäßen Vorrichtung 3 zur Verbindung eines Endes 101 einer Gummibandkette 1 mit einem anderen Ende 102 der Gummibandkette oder zur Verbindung eines Endes 101' eines ersten Bandsegments 1' einer Gummibandkette mit einem anderen Ende 102' eines zweiten Bandsegments 1" einer Gummibandkette.

Die Vorrichtung 3 umfasst zwei Rohre 6. In jedem der Rohre 6 befindet sich ein Bolzen 20, 21. Die Bolzen 20, 21 sind in ihrem jeweiligen Rohr 6 gummigelagert. Die Gummilagerung 18 befindet sich zwischen Bolzenoberfläche und Rohrinnenwandung. Die Gummilagerung 18 befindet sich in kraftschlüssigem oder reibschlüssigem Kontakt sowohl mit der Bolzenoberfläche als auch mit der Rohrinnenwandung. Ein Verdrehen der Bolzen 20, 21 in ihrem jeweiligen Rohr 6 bewirkt also eine Verformung oder Verdrillung der Gummilagerung 18, ohne dass sich die Kontaktflächen zwischen Bolzen 20, 21 und Gummilagerung 18 einerseits sowie zwischen Rohrinnenwandung und Gummilagerung 18 andererseits gegenseitig zueinander verschieben. Die Gummilagerung 18 hat vorzugsweise eine hohlzylinderförmige Gestalt. Die Gummilagerung 18 kann dabei aus einem einzigen Hohlzylinder pro Rohr 6 bestehen. Es ist aber genauso gut möglich, dass die Gummilagerung 18 aus zwei oder mehreren hohlzylinderförmigen Teilen besteht. Zwischen diesen hohlzylinderförmigen Teilen können gleiche oder verschiedene Abstände bestehen. Eine mehrteilige Gummilagerung 18 ist von Vorteil, da sich ein Bolzen 20, 21 mit einer solchen mehrteiligen Gummilagerung 18 besser, d. h. mit geringerem Kraftaufwand, in das jeweilige Rohr 6 einpressen lässt. Die Beabstandung der einzelnen Hohlzylinderteile der Gummilagerung 18 beträgt vorzugsweise einige Millimeter, z. B. zwischen 1 und 10 mm, vorzugsweise zwischen 1 und 5 mm. Es empfiehlt sich allerdings, dass der sogenannte Füllgrad des Lagers, also der Anteil von gummigefülltem Zwischenraum zwischen Bolzen und Rohrinnenwandung am Gesamtzwischenraum, bei mindestens 95%, vorzugsweise bei mindestens 98 % liegt. Dies gewährleistet einen zuverlässigen Festsitz der Gummilagerung 18 zwischen Rohrinnenwandung und Gummilagerung 18 einerseits sowie zwischen Bolzenaußenfläche und Gummilagerung 18 anderseits.

Jedes der Rohre 6 kann jeweils in das eine Ende 101, 101' und in das andere Ende 102, 102' der Gummibandkette 1 oder der Bandsegmente 1', 1" eingelassen werden. Dies ist insbesondere aus der Schnittansicht der Figur 4c ersichtlich, wo das Rohr 6 in den Gummigrundkörper 2, 15 der Enden der Bandsegmente 1' und 1" eingelassen ist. Die Rohre 6 sind vorzugsweise derart in den Gummigrundkörper 2 eingelassen, dass keine Verschiebung zwischen Rohraußenfläche und daran anliegender Gummigrundkörperfläche erfolgt. Aus den Rohren 6 ragen die Bolzen 20, 21 vorzugsweise jeweils beidseitig ein Stück hervor. Über diese hervorstehenden Enden der Bolzen 20, 21 sind die Bolzen 20, 21 über Verbinder 10 zueinander verdrehfest koppelbar. Dazu weisen die Verbinder 10 vorzugsweise eine rahmenartige Struktur auf, welche über die beiden Bolzen 20, 21 geschoben werden kann. Vorzugsweise kann die rahmenartige Struktur der Verbinder mittels einer Schraube 11 so verspannt werden, dass der Verbinder 10 mit den Bolzen 20, 21 kraftschlüssig verbunden ist, womit ein Abrutschen der Verbinder 10 von den Bolzen 20, 21 verhindert wird. Darüber hinaus können nach Aufstecken der Verbinder 10 auch noch Verbindersicherungen an den Bolzen 20, 21 angebracht sein. Eine solche Verbindersicherung kann z. B. ein Splint darstellen, welcher außerhalb des Verbinders 10 durch eine Bohrung im über den Verbinder 10 hinausstehenden Ende des Bolzens 20, 21 durch den Bolzen geschoben ist.

Erfindungsgemäß ist die durch die Gummilagerung 18 hervorgerufene Verdrehsteifigkeit der Bolzen 20, 21 gegenüber ihrem jeweiligen Rohr 6 in Abhängigkeit zur Biegesteifigkeit der Gummibandkette 1 oder der Bandsegmente 1', 1" im Bereich der Enden 101, 102; 101', 102' eingestellt. Um dies zu erreichen, kann es im Hinblick auf Figur 4c zweckmäßig sein, dass sich die Gummimischung der Gummilagerung 18 von der Gummimischung des Gummigrundkörpers 2 unterscheidet. Dies ist deshalb vorteilhaft, da dann die Spezifikationen der Gummimischung der Gummilagerung 18 speziell auf die oben geschilderten Anforderungen angepasst werden können. Dies ist jedoch nicht zwingend notwendig, denn es kann unter Umständen auch vorteilhaft sein, jeweils die gleiche Gummimischung für Gummilagerung 18 und Gummigrundkörper 2 zu verwenden.

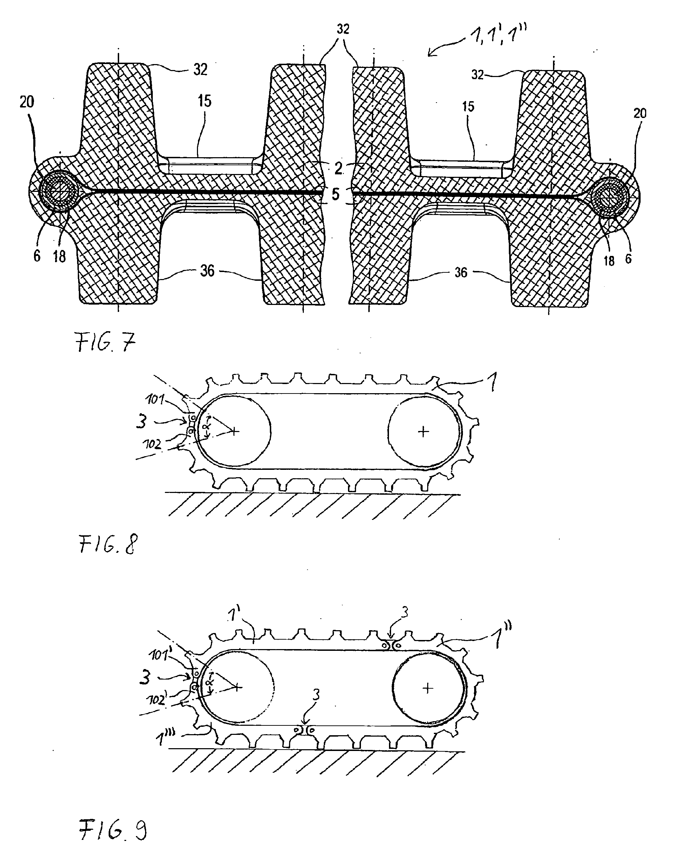

Vorzugsweise ist zumindest im verwendungsspezifischen Schwenkwinkelbereich α (siehe dazu auch Figur 8 und Figur 9) der Enden 101, 102 der Gummibandkette oder der Enden 101', 102' der Bandsegmente 1', 1" zueinander die Verdrehsteifigkeit der Bolzen 20, 21 gegenüber ihrem jeweiligen Rohr 6 nicht größer als die Biegesteifigkeit der Gummibandkette 1 oder der Bandsegmente 1', 1" im Bereich der Enden 101, 102; 101', 102'. Die Verdrehsteifigkeit der Bolzen 20, 21 gegenüber ihrem jeweiligen Rohr 6 entspricht dem Drehmoment, das benötigt wird, um eine Verdrehung des Bolzens 20, 21 aus der undeformierten Lage der Gummilagerung 18 heraus um einen Winkel β zu erreichen (siehe auch dazu Figur 3). Die Verdrehsteifigkeit der Bolzen 20, 21 entspricht also dem Drehmomentwiderstand, den die Gummilagerung 18 einer Verdrehung des Bolzens 20, 21 um den Winkel β entgegensetzt. Als Biegesteifigkeit der Gummibandkette 1 oder der Bandsegmente 1', 1" im Bereich der Enden 101, 102; 101', 102' kann in analoger Weise der Drehmomentwiderstand verstanden werden, den der Endbereich 101, 102; 101', 102' einem Abknicken gegenüber dem restlichen Teil des Gummigrundkörpers 2 um den Winkel β entgegensetzt. Um die Biegesteifigkeit der Gummibandkette 1 oder der Bandsegmente 1', 1" im Bereich der Enden 101, 102; 101', 102' zu messen, kann beispielsweise im Fall der Figur 3 bestimmt werden, um welchen Winkel die neutrale Faser des Gummigrundkörpers 2 (diese neutrale Faser verläuft ungefähr in der Mitte zwischen den Traversen 50 und 51) abknickt, wenn ein bestimmtes Drehmoment direkt auf den Endbereich der Gummibandkette oder der Bandsegmente einwirkt.

Vorzugsweise ist die Verdrehsteifigkeit der Bolzen 20, 21 zumindest um einen Faktor 1,5 bis 4 geringer als die Biegesteifigkeit der Gummibandkette 1 oder der Bandsegmente 1', 1" im Bereich der Enden 101, 102; 101', 102'. Besonders bevorzugt ist die Verdrehsteifigkeit der Bolzen 20, 21 gegenüber der Biegesteifigkeit der Gummibandkette 1 oder der Bandsegmente 1', 1" im Bereich der Enden 101, 102; 101', 102' vernachlässigbar klein.

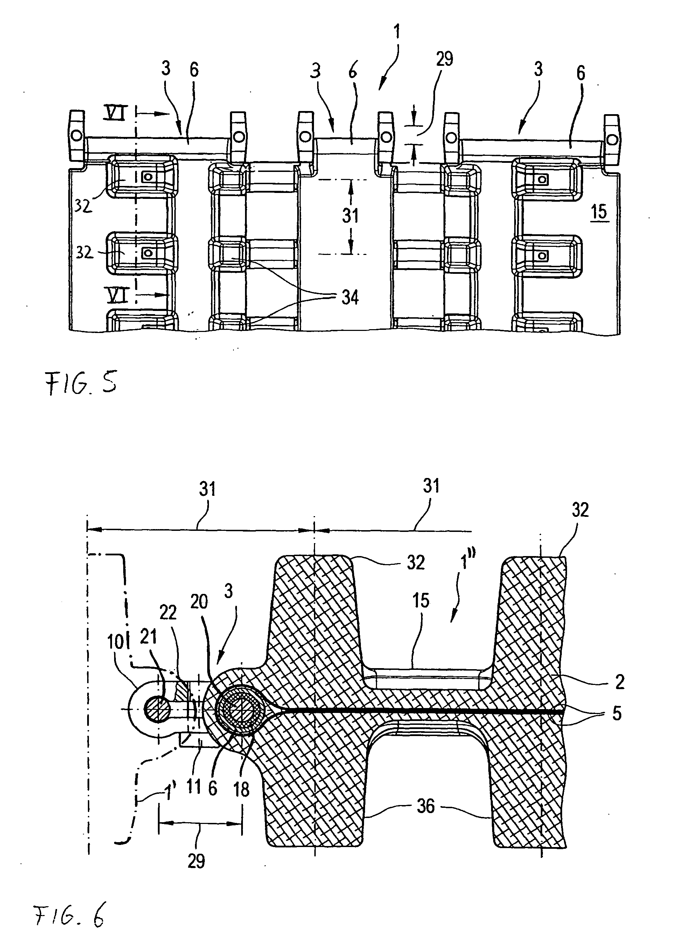

In den Figuren 5 und 6 ist der Einsatz der erfindungsgemäßen Vorrichtung 3 bei einer Bändergleiskette gezeigt. Die durch die Bolzen 20, 21 und den Verbinder 10 definierte Schließstelle 3 weist eine Teilung 29 auf. Diese beträgt vorzugsweise ein Drittel der Bandsegmentteilung 31, die definiert ist durch den Abstand zwischen den Führungszähnen 32 und zwischen den zu den Führungszähnen 32 fluchtenden Antriebsnocken 34. Bodenseitig weist die Bändergleiskette einvulkanisierte Laufnocken 36 auf. Bei der in den Figuren 5 und 6 dargestellten Bändergleiskette sind drei Schließstellen 3 nebeneinander auf einer Höhe angeordnet. Es ist aber stattdessen genauso gut auch möglich, über die gesamte Breite der Kette nur eine einzige Schließstelle 3 vorzusehen. Die Bandsegmente 1', 1" der Bändergleiskette können in ihrem Grundkörper 2 einvulkanisierte, zugbelastbare Einlagen 5 aufweisen, welche die quer im Grundkörper 2 eingelassenen Rohre 6 umschlingen.

Aufgrund der Verbinder 10 liegt eine leichte Montierbarkeit bzw. Demontierbarkeit der Kette am Fahrzeug vor. Ein Anheben des Fahrzeugs ist nicht erforderlich. Die Bändergleiskette wird auf dem Boden ausgelegt und nach dem Auffahren des Fahrzeugs auf den ausgelegten Kettenstrang an der oder den Schließstellen 3 verbunden. In umgekehrter Reihenfolge erfolgt das Ablegen der teilbaren Kette. Ein Vorteil besteht darin, dass der Aufwand bei der Kettenmontage und -Demontage am Fahrzeug sehr klein ist bei geringem Personalaufwand. Die Unfallgefahr bei der Montage der Bandkette am Fahrzeug ist vermindert, da das Fahrzeug nicht angehoben werden muss. Schließlich ist der Lager- und Transportraum durch die Aufrollmöglichkeit der Bandkette mit Schließstelte oder Schließstellen gering. Bei Bandketten mit mehreren Schließstellen können bei Beschädigung einzelne Bandsegmente direkt am Fahrzeug ausgetauscht werden.

Figur 7 zeigt ein Bandsegment 1', 1" oder eine Bandkette 1 mit erfindungsgemäßer Schließstelle. Weder das Vorhandensein von Laufnocken 36 noch das Vorsehen von Führungszähnen 32 und Antriebsnocken 34 ist für das Funktionieren der erfindungsgemäßen Vorrichtung 3 erforderlich.

Figur 8 zeigt deshalb beispielhaft eine führungszahnlose und antriebsnockenlose Gummibandkette 1 mit zwei Enden 101, 102, welche mittels einer einzigen erfindungsgemäßen Vorrichtung 3 miteinander zu einer geschlossenen Kette verbindbar sind. Dabei kann bei einer breiten Gummibandkette 1 die einzige Vorrichtung 3 in Analogie zu Figur 5 auch durch mehrere zueinander fluchtende Schließstellen 3 ersetzt werden. Figur 8 illustriert zudem den oben eingeführten Begriff des verwendungsspezifischen Schwenkwinkelbereichs α. An den Umlenkrollen und/oder Antriebsrollen des Kettenfahrzeugs werden die Enden 101, 102 der Gummibandkette 1 zueinander um den Winkel α verschwenkt. Da jede der beiden Gummilagerungen 18 um die Bolzen 20 und 21 jeweils ungefähr zur Hälfte die Verschwenkung α der Enden zueinander aufnimmt, gilt näherungsweise α = 2 β.

Figur 9 zeigt eine erfindungsgemäße Gummibandkette mit mehreren Bandsegmenten 1', 1", 1"', deren Enden 101', 102' mittels einer oder mehrerer erfindungsgemäßer Vorrichtungen 3 miteinander zu einer geschlossenen Kette verbindbar sind. Um Wiederholungen zu vermeiden, werden die Ausführungen zu Figur 8 vollumfänglich in Bezug genommen, welche in analoger Weise auch für die Ausführungsform in Figur 9 zutreffen.

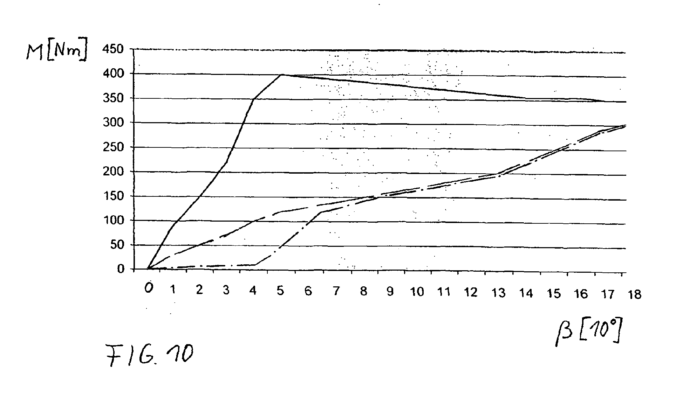

Figur 10 zeigt ein Diagramm, in welchem die Abhängigkeit der Verdrehsteifigkeit des Bolzens 20, 21 vom jeweiligen Verdrehwinkel β für drei verschiedene Lagertypen dargestellt ist. Die Abszisse ist in 10°-Schritten abgetragen, reicht also von 0 bis 180°. Die Verdrehsteifigkeit, also der Drehmomentwiderstand, den das entsprechende Lager einer Verdrehung des Bolzens entgegensetzt, ist in Nm (= Newtonmeter) angegeben.

Die durchgezogene Linie zeigt die Verhältnisse bei einem konventionell gummigelagerten Bolzen bei einer Gleiskette mit Stahlgliedern. Die gleich zu Beginn der Verdrehung stark ansteigende Kurve verdeutlicht, dass die Gummilagerung der Bolzenverdrehung bereits von Anfang an einen hohen stetig wachsenden Drehmomentwiderstand entgegensetzt. Der Drehmomentwiderstand steigt bereits in den ersten 50° auf den sehr hohen Wert von 400 Nm an Bereits bei diesem Winkelwert von 50° kann das Lager bereits keinen weiteren Drehmomentwiderstand aufnehmen, so dass bei einer potentiellen weiteren Verdrehung die Kräfte durch die Stahlglieder der Kette aufgenommen werden müssen. Dies stellt jedoch bei der Zähigkeit und strukturellen Festigkeit von Stahl in der Regel für eine solche Kette kein Problem dar.

Die gestrichelte Linie zeigt die Verhältnisse bei einer Gummibandkette mit konventioneller Gummilagerung. Die Charakteristik dieser gestrichelten Kurve ist ähnlich zur durchgezogenen Kurve der Stahlkette, nur mit dem Unterschied, dass die Steigung der gestrichelten Kurve der Gummibandkette geringer ist. Dies liegt daran, dass bei einer Verschwenkung der Enden der Gummibandkette zueinander das Drehmoment nicht nur vom Gummilager, sondern auch von den Enden des Gummibandkörpers selbst aufgenommen wird. Problematisch ist bei der konventionellen Gummilagerung jedoch, dass bereits mit dem ersten Grad der Verdrehung des Bolzens 20, 21 gegenüber seiner Lagerung mit steigender Verdrehung auch ein stetig wachsendes Biegemoment auf den um die Gummilagerung angeordneten Gummibandkörper übertragen wird. Dies führt zu einer Ermüdung des Gummimaterials des Gummibandkörpers im Verbindungsbereich der beiden Enden, welche letztlich zu zerstörerischen Rissen im Gummibandkörper und im schlimmsten Fall zum Abriss der Gummibandkette führen kann.

Die strichpunktierte Linie zeigt die Verhältnisse bei einer Gummibandkette mit erfindungsgemäßer Gummilagerung 18. Hier ist klar zu sehen, dass die Gummilagerung 18 einer Verdrehung des Bolzens 20, 21 bis zu einem Winkel von ca. 40° nahezu keinen Drehmomentwiderstand entgegensetzt. Dadurch kann gewährleistet werden, dass in den ersten 40° Verdrehungsbereich des Bolzens nahezu alle Drehmomente und Kräfte nur vom Lager aufgenommen werden und nicht den umliegenden Gummibandkörper beanspruchen. Erst wenn die Gummilagerung 18 ab einer Verdrehung des Bolzens um ca. 40° keine zusätzlichen Kräfte mehr aufnehmen kann, steigt der Drehmomentwiderstand an und der Kettenkörper muss die zusätzlichen Kräfte aufnehmen. Erst dann würde der Gummibandkörper anfangen sich zu verdrehen. Da jedoch der Verdrehwinkelbereich für β von 0 bis 40° (= verwendungsspezifischer Schwenkwinkelbereich α von 0 bis 80°) den Betrieb einer Gummibandkette selbst bei extremen Belastungsspitzen abdeckt, kommt dieser Anstieg des Drehmomentwiderstands nicht mehr zum tragen.

Die erfindungsgemäße Vorrichtung 3 gewährleistet also eine verschleißfreie Verbindung zweier Enden einer Gummibandkette oder von zwei Bandsegmenten, und zwar sowohl was die reibungsfreie Lagerung der Bolzen 20, 21 an sich, als auch die verminderte Zug- und/oder Dehnungsbelastung der Endbereiche des Gummibandkörpers anbelangt.

## Patentansprüche

1. Vorrichtung (3) zur Verbindung eines Endes (101) einer Gummibandkette (1) mit einem anderen Ende (102) der Gummibandkette (1) oder zur Verbindung eines Endes (101') eines ersten Bandsegments (1') einer Gummibandkette mit einem anderen Ende (102') eines zweiten Bandsegments (1") einer Gummibandkette, umfassend:
zumindest zwei Rohre (6) mit einem in dem jeweiligen Rohr (6) gummigelagerten (18) Bolzen (20, 21), von denen jeweils eines (6) in das eine Ende (101, 101') und in das andere Ende (102, 102') der Gummibandkette (1) oder der Bandsegmente (1', 1") eingelassen werden kann, und zumindest einen Verbinder (10), mittels welchem die Bolzen (20, 21) zueinander verdrehfest koppelbar (11) sind,
**dadurch gekennzeichnet**, dei dass durch die Gummilagerung (18) hervorgerufene Verdrehsteifigkeit der Bolzen (20, 21) gegenüber ihrem jeweiligen Rohr (6) in Abhängigkeit zur Biegesteifigkeit der Gummibandkette (1) oder der Bandsegmente (1', 1") im Bereich der Enden (101, 102; 101', 102') eingestellt ist,
wobei die durch die Gummilagerung (18) hervorgerufene Verdrehsteifigkeit der Bolzen (20, 21) gegenüber ihrem jeweiligen Rohr (6) über die Dicke der Gummilagerung (18) zwischen Bolzen (20, 21) und Rohrinnenfläche oder über die beim Einpressen der Bolzen (20, 21) in ihr jeweiliges Rohr (6) aufzuwendende Kraft und die mit diesem Einpressen verbundene Kompression der Gummilagerung (18) eingestellt ist.

2. Vorrichtung (3) nach Anspruch 1,
wobei die Verdrehsteifigkeit der Bolzen (20, 21) gegenüber ihrem jeweiligen Rohr (6), zumindest im verwendungsspezifischen Schwenkwinkelbereich (α) der Enden (101, 102) der Gummibandkette (1) oder der Enden (101', 102') der Bandsegmente (1', 1") zueinander, die Biegesteifigkeit der Gummibandkette (1) oder der Bandsegmente (1', 1") im Bereich der Enden (101, 102; 101', 102') nicht übersteigt, wobei vorzugsweise die Verdrehsteifigkeit der Bolzen (20, 21) zumindest um einen Faktor 1,5 bis 4 geringer als die Biegesteifigkeit der Gummibandkette (1) oder der Bandsegmente (1', 1") im Bereich der Enden (101, 102; 101', 102') ist, oder besonders bevorzugt die Verdrehsteifigkeit der Bolzen (20, 21) gegenüber der Biegesteifigkeit der Gummibandkette (1) oder der Bandsegmente (1', 1") im Bereich der Enden (101, 102; 101', 102") vernachlässigbar klein ist.

3. Vorrichtung (3) nach Anspruch 2,
wobei der verwendungsspezifische Schwenkwinkelbereich (α) der Enden (101, 102; 101', 102') der Gummibandkette (1) oder der Bandsegmente (1', 1") zueinander zwischen 0 und 30 Grad, vorzugsweise zwischen 0 und 60 Grad, und besonders bevorzugt zur Abdeckung auch extremer Belastungsspitzen zwischen 0 und 80 Grad beträgt.

4. Vorrichtung (3) nach einem der Ansprüche 1 bis 3,
wobei die durch die Gummilagerung (18) hervorgerufene Verdrehsteifigkeit der Bolzen (20, 21) gegenüber ihrem jeweiligen Rohr (6) in Abhängigkeit zur Masse des Fahrzeugs eingestellt ist, bei welchem die Gummibandkette (1; 1', 1") aufgezogen werden soll.

5. Vorrichtung (3) nach Anspruch 4,
wobei die durch die Gummilagerung (18) hervorgerufene Verdrehsteifigkeit der Bolzen (20, 21) bei einer Verdrehung (β) der Bolzen (20, 21) gegenüber ihrem jeweiligen Rohr (6) um 15 Grad bei einer Fahrzeugmasse von 4000 kg ungefähr 5 Nm, bei einer Fahrzeugmasse von 8000 kg ungefähr 7 Nm, bei einer Fahrzeugmasse von 12000 kg ungefähr 12 Nm, bei einer Fahrzeugmasse von 15000 kg ungefähr 18 Nm, bei einer Fahrzeugmasse von 18000 kg ungefähr 23 Nm, und bei einer Fahrzeugmasse von 20000 kg ungefähr 25 Nm beträgt.

6. Vorrichtung (3) nach Anspruch 4 oder 5,
wobei die durch die Gummilagerung (18) hervorgerufene Verdrehsteifigkeit der Bolzen (20, 21) gegenüber ihrem jeweiligen Rohr (6) über den Spannungswert der Gummimischung eingestellt ist, wobei der Spannungswert umso größer ist, je größer die Fahrzeugmasse ist.

7. Vorrichtung (3) nach Anspruch 6,
wobei der Spannungswert₃₀₀ nach DIN 53504 (σ₃₀₀) der Gummimischung bei Fahrzeugmassen zwischen 4000 kg und 20000 kg ungefähr zwischen 3,8 MPa und 12,4 MPa beträgt.

8. Vorrichtung (3) nach einem der Ansprüche 4 bis 7,
wobei die Dicke der Gummilagerung (18) durch ein ungefähr gleich bleibendes Verhältnis von Bolzendurchmesser zu Rohrinnendurchmesser gegeben ist, wobei der Bolzendurchmesser umso größer ist, je größer die Fahrzeugmasse ist.

9. Vorrichtung (3) nach einem der Ansprüche 4 bis 8,
wobei die aufgewandte Einpresskraft und die damit verbundene Kompression der Gummilagerung (18) umso größer ist, je größer die Fahrzeugmasse ist.

10. Vorrichtung (3) nach Anspruch 9,
wobei die Einpresskraft bei Fahrzeugmassen zwischen 4000 kg und 20000 kg ungefähr zwischen 35 kN und 80 kN beträgt.

11. Gummibandkette (1) mit zwei Enden (101, 102), welche mittels einer einzigen Vorrichtung (3) nach einem der Ansprüche 1 bis 10 miteinander zu einer geschlossenen Kette verbunden sind,
wobei in beiden Enden (101, 102) jeweils ein Rohr (6) mit einem in dem Rohr gummigelagerten (18) Bolzen (20, 21) eingelassen ist,
wobei die Bolzen (20, 21) über zumindest einen Verbinder (10) zueinander verdrehfest koppelbar (11) sind,
wobei die durch die Gummilagerung (18) hervorgerufene Verdrehsteifigkeit der Bolzen (20, 21) gegenüber ihrem jeweiligen Rohr (6) in Abhängigkeit zur Biegesteifigkeit der Gummibandkette (1) im Bereich der Enden (101, 102) eingestellt ist, und
wobei die durch die Gummilagerung (18) hervorgerufene Verdrehsteifigkeit der Bolzen (20, 21) gegenüber ihrem jeweiligen Rohr (6) über die Dicke der Gummilagerung (18) zwischen Bolzen (20, 21) und Rohrinnenfläche oder über die beim Einpressen der Bolzen (20, 21) in ihr jeweiliges Rohr (6) aufzuwendende Kraft und die mit diesem Einpressen verbundene Kompression der Gummilagerung (18) eingestellt ist.

12. Gummibandkette mit mehreren Bandsegmenten (1', 1"), deren Enden (101', 102') mittels einer oder mehrerer Vorrichtungen (3) nach einem der Ansprüche 1 bis 10 miteinander zu einer geschlossenen Kette verbunden sing,
wobei in jedem der Enden (101', 102') jeweils ein Rohr (6) mit einem in dem Rohr gummigelagerten (18) Bolzen (20, 21) eingelassen ist,
wobei die Bolzen (20, 21) von zwei miteinander zu verbindenden Bandsegmenten (1', 1") über zumindest einen Verbinder (10) zueinander verdrehfest koppelbar (11) sind,
wobei die durch die Gummilagerung (18) hervorgerufene Verdrehsteifigkeit der Bolzen (20, 21) gegenüber ihrem jeweiligen Rohr (6) in Abhängigkeit zur Biegesteifigkeit der Bandsegmente (1', 1") im Bereich der Enden (101', 102') eingestellt ist,
wobei die durch die Gummilagerung (18) hervorgerufene Verdrehsteifigkeit der Bolzen (20, 21) gegenüber ihrem jeweiligen Rohr (6) über die Dicke der Gummilagerung (18) zwischen Bolzen (20, 21) und Rohrinnenfläche oder über die beim Einpressen der Bolzen (20, 21) in ihr jeweiliges Rohr (6) aufzuwendende Kraft und die mit diesem Einpressen verbundene Kompression der Gummilagerung (18) eingestellt ist.

13. Gummibandkette nach Anspruch 12,
wobei die Bandsegmente (1', 1") jeweils einen Grundkörper (2) aus Gummi aufweisen, der einvulkanisierte, zugbelastbare Einlagen (5) aufweist, welche die quer im Grundkörper (2) eingelassenen Rohre (6) umschlingen.

## Claims

1. Device (3) for connecting one end (101) of a rubber band chain (1) to another end (102) of the rubber band chain (1) or for connecting one end (101') of a first band segment (1') of a rubber band chain to another end (102') of a second band segment (1") of a rubber band chain, said device comprising:
at least two tubes (6) having a pin (20, 21) which is rubber-mounted (18) in the respective tube (6), it being possible for one of said pins (6) in each case to be inserted into the one end (101, 101') and into the other end (102, 102') of the rubber band chain (1) or of the band segments (1', 1"), and
at least one connector (10), by means of which the pins (20, 21) are couplable together (11) in a rotationally fixed manner,
**characterized in that** the rotational rigidity of the pins (20, 21) in relation to their respective tube (6), brought about by the rubber mounting (18), is adjusted in dependence on the flexural strength of the rubber band chain (1) or of the band segments (1', 1") in the region of the ends (101, 102; 101', 102'),
wherein the rotational rigidity of the pins (20, 21) in relation to their respective tube (6), brought about by the rubber mounting (18), is adjusted via the thickness of the rubber mounting (18) between the pins (20, 21) and the inside surface of the tube or via the force to be applied when pressing the pins (20, 21) into their respective tube (6) and the compression of the rubber mounting (18) connected to said pressing-in.

2. Device (3) according to Claim 1, wherein the rotational rigidity of the pins (20, 21) in relation to their respective tube (6), at least in the application-specific pivoting angle region (α) of the ends (101, 102) of the rubber band chain (1) or of the ends (101', 102') of the band segments (1', 1") in relation to each other, does not exceed the flexural strength of the rubber band chain (1) or of the band segments (1', 1") in the region of the ends (101, 102; 101', 102'), the rotational rigidity of the pins (20, 21) preferably being at least a factor of between 1.5 and 4 times less than the flexural strength of the rubber band chain (1) or of the band segments (1', 1") in the region of the ends (101, 102; 101', 102'), or, in a particularly preferred manner, the rotational rigidity of the pins (20, 21) in relation to the flexural strength of the rubber band chain (1) or of the band segments (1', 1") being negligibly small in the region of the ends (101, 102; 101', 102').

3. Device (3) according to Claim 2, wherein the application-specific pivoting angle region (α) of the ends (101, 102; 101', 102') of the rubber band chain (1) or of the band segments (1', 1") in relation to each other is between 0 and 30 degrees, preferably between 0 and 60 degrees and, in a particularly preferred manner, for also covering extreme load peaks, between 0 and 80 degrees.

4. Device (3) according to one of Claims 1 to 3, wherein the rotational rigidity of the pins (20, 21) in relation to their respective tube (6), brought about by the rubber mounting (18), is adjusted in dependence on the weight of the vehicle on which the rubber band chain (1; 1', 1") is to be fitted.

5. Device (3) according to Claim 4, wherein the rotational rigidity of the pins (20, 21), brought about by the rubber mounting (18), when the pins (20, 21) are rotated (ß) by 15 degrees in relation to their respective tube (6) at a vehicle weight of 4000 kg, is approximately 5 Nm, at a vehicle weight of 8000 kg it is approximately 7 Nm, at a vehicle weight of 12000 kg it is approximately 12 Nm, at a vehicle weight of 15000 kg it is approximately 18 Nm, at a vehicle weight of 18000 kg it is approximately 23 Nm and at a vehicle weight of 20000 kg it is approximately 25 Nm.

6. Device (3) according to Claim 4 or 5, wherein the rotational rigidity of the pins (20, 21) in relation to their respective tube (6), brought about by the rubber mounting (18), is adjusted via the tensile stress of the rubber compound, the tensile stress being all the greater, the greater the vehicle weight.

7. Device (3) according to Claim 6, wherein the tensile stress₃₀₀ to DIN 53504 (δ₃₀₀) of the rubber compound at vehicle weights of between 4000 kg and 20000 kg is approximately between 3.8 MPa and 12.4 MPa.

8. Device (3) according to one of Claims 4 to 7, wherein the thickness of the rubber mounting (18) is provided by an approximately constant ratio between the diameter of the pin and the inside diameter of the tube, the diameter of the pin being all the bigger, the greater the vehicle weight.

9. Device (3) according to one of Claims 4 to 8, wherein the pressing-in force applied and the compression of the rubber mounting (18) connected thereto is all the greater, the greater the vehicle weight.

10. Device (3) according to Claim 9, wherein the pressing-in force at vehicle weights between 4000 kg and 20000 kg is approximately between 35 kN and 80 kN.

11. Rubber band chain (1) having two ends (101, 102) which are connected together to form a closed chain by means of one single device (3) according to one of Claims 1 to 10,
wherein a tube (6) having a pin (20, 21) which is rubber-mounted (18) in the tube is inserted in each of the two ends (101, 102),
wherein the pins (20, 21) are couplable to each other (11) in a rotationally fixed manner by means of at least one connector (10),
wherein the rotational rigidity of the pins (20, 21) in relation to their respective tube (6), brought about by the rubber mounting (18), is adjusted in dependence on the flexural strength of the rubber band chain (1) in the region of the ends (101, 102), and
wherein the rotational rigidity of the pins (20, 21) in relation to their respective tube (6), brought about by the rubber mounting (18), is adjusted via the thickness of the rubber mounting (18) between the pins (20, 21) and the inside surface of the tube or via the force to be applied when pressing the pins (20, 21) into their respective tube (6) and the compression of the rubber mounting (18) connected to said pressing-in.

12. Rubber band chain having several band segments (1', 1"), the ends (101', 102') of which are connected to each other to form a closed chain by means of one or several devices (3) according to one of Claims 1 to 10,
wherein in each case a tube (6) having a pin (20, 21) which is rubber-mounted (18) in the tube is inserted in each of the ends (101', 102'),
wherein the pins (20, 21) of two band segments (1', 1") to be connected together are couplable to each other (11) in a rotationally fixed manner by means of at least one connector (10),
wherein the rotational rigidity of the pins (20, 21) in relation to their respective tube (6), brought about by the rubber mounting (18), is adjusted in dependence on the flexural strength of the band segments (1', 1") in the region of the ends (101', 102'),
wherein the rotational rigidity of the pins (20, 21) in relation to their respective tube (6), brought about by the rubber mounting (18), is adjusted via the thickness of the rubber mounting (18) between the pins (20, 21) and the inside surface of the tube or via the force to be applied when pressing the pins (20, 21) into their respective tube (6) and the compression of the rubber mounting (18) connected to said pressing-in.

13. Rubber band chain according to Claim 12, wherein the band segments (1', 1") each have a base body (2) made of rubber, which has inserts (5) which have been vulcanized-in, can be loaded in a tensile manner and wrap around the tubes (6) inserted in a transverse manner in the base body (2).

## Revendications

1. Dispositif (3) pour la liaison d'une extrémité (101) d'une chaîne à ruban en caoutchouc (1) à une autre extrémité (102) de la chaîne à ruban en caoutchouc (1) ou pour la liaison d'une extrémité (101') d'un premier segment de ruban (1') d'une chaîne à ruban en caoutchouc à une autre extrémité (102') d'un deuxième segment de ruban (1") d'une chaîne à ruban en caoutchouc, comprenant :
au moins deux tubes (6) avec un boulon (20, 21) supporté sur caoutchouc (18) dans le tube respectif (6), dont à chaque fois l'un (6) peut être introduit dans l'une des extrémités (101, 101') et dans l'autre extrémité (102, 102') de la chaîne à ruban en caoutchouc (1) ou des segments de ruban (1', 1"), et
au moins un dispositif de liaison (10), au moyen duquel les boulons (20, 21) peuvent être accouplés (11) de manière solidaire en rotation l'un à l'autre,
**caractérisé en ce que** la rigidité en torsion des boulons (20, 21) produite par le support sur caoutchouc (18) par rapport à leur tube respectif (6) est ajustée en fonction de la rigidité en flexion de la chaîne à ruban en caoutchouc (1) ou des segments de ruban (1', 1") dans la région des extrémités (101, 102 ; 101', 102'),
la rigidité en torsion des boulons (20, 21) produite par le support sur caoutchouc (18) par rapport à leur tube respectif (6) étant ajustée par le biais de l'épaisseur du support sur caoutchouc (18) entre les boulons (20, 21) et la surface intérieure du tube ou par le biais de la force à appliquer lors de l'enfoncement des boulons (20, 21) dans leur tube respectif (6) et de la compression du support sur caoutchouc (18) associée à cet enfoncement.

2. Dispositif (3) selon la revendication 1, dans lequel la rigidité en torsion des boulons (20, 21) par rapport à leur tube respectif (6), au moins dans la plage angulaire de pivotement (α) spécifique à l'utilisation des extrémités (101, 102) de la chaîne à ruban en caoutchouc (1) ou des extrémités (101', 102') des segments de ruban (1', 1") l'une par rapport à l'autre, ne dépasse pas la rigidité en flexion de la chaîne à ruban en caoutchouc (1) ou des segments de ruban (1', 1") dans la région des extrémités (101, 102 ; 101', 102'), la rigidité en torsion des boulons (20, 21) étant de préférence inférieure d'au moins un facteur de 1,5 à 4 à la rigidité en flexion de la chaîne à ruban en caoutchouc (1) ou des segments de ruban (1', 1") dans la région des extrémités (101, 102 ; 101', 102'), ou, particulièrement préférablement, la rigidité en torsion des boulons (20, 21) étant faible de manière négligeable par rapport à la rigidité en flexion de la chaîne à ruban en caoutchouc (1) ou des segments de ruban (1', 1") dans la région des extrémités (101, 102 ; 101', 102').

3. Dispositif (3) selon la revendication 2, dans lequel la plage angulaire de pivotement (α) spécifique à l'utilisation des extrémités (101, 102) de la chaîne à ruban en caoutchouc (1) ou des extrémités (101', 102') des segments de ruban (1', 1") l'une par rapport à l'autre est comprise entre 0 et 30°, de préférence entre 0 et 60°, et particulièrement préférablement pour couvrir également des pointes de sollicitation extrêmes, entre 0 et 80°.

4. Dispositif (3) selon l'une quelconque des revendications 1 à 3, dans lequel la rigidité en torsion des boulons (20, 21) produite par le support sur caoutchouc (18) par rapport à leur tube respectif (6) est ajustée en fonction de la masse du véhicule dans lequel la chaîne à ruban en caoutchouc (1 ; 1', 1") doit être tendue.

5. Dispositif (3) selon la revendication 4, dans lequel la rigidité en torsion des boulons (20, 21) produite par le support sur caoutchouc (18), dans le cas d'une torsion (β) des boulons (20, 21) par rapport à leur tube respectif (6) de 15° pour une masse du véhicule de 4000 kg, est approximativement 5 Nm, pour une masse du véhicule de 8000 kg, approximativement 7 Nm, pour une masse du véhicule de 12 000 kg, approximativement 12 Nm, pour une masse du véhicule de 15 000 kg, approximativement 18 Nm, pour une masse du véhicule de 18 000 kg, approximativement 23 Nm et pour une masse du véhicule de 20 000 kg, approximativement 25 Nm.

6. Dispositif (3) selon la revendication 4 ou 5, dans lequel la rigidité en torsion des boulons (20, 21) produite par le support sur caoutchouc (18) par rapport à leur tube respectif (6) est ajustée par le biais de la valeur de tension du mélange de caoutchouc, la valeur de tension étant d'autant plus grande que la masse du véhicule est importante.

7. Dispositif (3) selon la revendication 6, dans lequel la valeur de tension₃₀₀ selon la norme DIN 53504 (σ₃₀₀) du mélange de caoutchouc pour des masses du véhicule comprises entre 4000 kg et 20 000 kg est approximativement comprise entre 3,8 MPa et 12,4 MPa.

8. Dispositif (3) selon l'une quelconque des revendications 4 à 7, dans lequel l'épaisseur du support sur caoutchouc (18) est donnée par un rapport approximativement uniforme du diamètre du boulon au diamètre intérieur du tube, le diamètre du boulon étant d'autant plus grand que la masse du véhicule est importante.

9. Dispositif (3) selon l'une quelconque des revendications 4 à 8, dans lequel la force d'enfoncement appliquée et donc la compression associée du support sur caoutchouc (18) est d'autant plus grande que la masse du véhicule est importante.

10. Dispositif (3) selon la revendication 9, dans lequel la force d'enfoncement pour des masses du véhicule comprises entre 4000 kg et 20 000 kg est approximativement comprise entre 35 kN et 80 kN.

11. Chaîne à ruban en caoutchouc (1) comprenant deux extrémités (101, 102) qui sont reliées l'une à l'autre pour former une chaîne fermée au moyen d'un dispositif unique (3) selon l'une quelconque des revendications 1 à 10,
un tube (6) étant à chaque fois introduit dans les deux extrémités (101, 102) avec un boulon (20, 21) supporté sur caoutchouc (18) dans le tube,
les boulons (20, 21) pouvant être accouplés (11) l'un à l'autre de manière solidaire en rotation par le biais d'au moins un dispositif de liaison (10),
la rigidité en torsion des boulons (20, 21) produite par le support sur caoutchouc (18) par rapport à leur tube respectif (6) étant ajustée en fonction de la rigidité en flexion de la chaîne à ruban en caoutchouc (1) dans la région des extrémités (101, 102), et
la rigidité en torsion des boulons (20, 21) produite par le support sur caoutchouc (18) par rapport à leur tube respectif (6) étant ajustée par le biais de l'épaisseur du support sur caoutchouc (18) entre les boulons (20, 21) et la surface intérieure du tube ou par le biais de la force à appliquer lors de l'enfoncement des boulons (20, 21) dans leur tube respectif (6) et de la compression du support sur caoutchouc (18) associée à cet enfoncement.

12. Chaîne à ruban en caoutchouc comprenant plusieurs segments de ruban (1', 1"), dont les extrémités (101', 102') sont reliées l'une à l'autre pour former une chaîne fermée au moyen d'un ou de plusieurs dispositifs (3) selon l'une quelconque des revendications 1 à 10,
un tube (6) étant à chaque fois introduit dans chacune des extrémités (101', 102') avec un boulon (20, 21) supporté sur caoutchouc (18) dans le tube,
les boulons (20, 21) de deux segments de ruban (1', 1") à relier l'un à l'autre pouvant être accouplés (11) l'un à l'autre de manière solidaire en rotation par le biais d'au moins un dispositif de liaison (10),
la rigidité en torsion des boulons (20, 21) produite par le support sur caoutchouc (18) par rapport à leur tube respectif (6) étant ajustée en fonction de la rigidité en flexion des segments de ruban (1', 1") dans la région des extrémités (101', 102'), et
la rigidité en torsion des boulons (20, 21) produite par le support sur caoutchouc (18) par rapport à leur tube respectif (6) étant ajustée par le biais de l'épaisseur du support sur caoutchouc (18) entre les boulons (20, 21) et la surface intérieure du tube ou par le biais de la force à appliquer lors de l'enfoncement des boulons (20, 21) dans leur tube respectif (6) et de la compression du support sur caoutchouc (18) associée à cet enfoncement.

13. Chaîne à ruban en caoutchouc selon la revendication 12, dans laquelle les segments de ruban (1', 1") présentent à chaque fois un corps de base (2) en caoutchouc qui présente des inserts (5) vulcanisés, pouvant être sollicités en traction, qui entourent les tubes (6) introduits transversalement dans le corps de base (2).
